# NEUE EUROPÄISCHE PATENTSCHRIFT

(11) **EP 3 088 567 B2**
(45) Veröffentlichungstag und Bekanntmachung des Hinweises auf die Entscheidung über den Einspruch: **09.07.2025**
(45) Hinweis auf die Patenterteilung: 20.02.2019
(21) Anmeldenummer: 16165731.7
(22) Anmeldetag: 18.04.2016
(51) Int. Cl.: C23C 22/74, B05D 7/00, C09D 5/08, B05D 7/16, C23C 22/24, C23C 22/82, C23C 28/00

(54) **MULTILAYERBESCHICHTUNG**
MULTILAYER COATING
REVETEMENT MULTICOUCHE

(30) Priorität: 30.04.2015 DE 102015005625
(43) Veröffentlichungstag der Anmeldung: 02.11.2016
(73) Patentinhaber: Liebherr-Aerospace Lindenberg GmbH, 88161 Lindenberg/Allgäu (DE)
(72) Erfinder: Kröger, Benjamin, 88212 Ravensburg (DE); Waibel, Christof, 74417 Schwend (DE)
(74) Vertreter: Herrmann, Uwe

(56) Entgegenhaltungen:
- EP-A1- 0 508 306
- EP-A1- 1 683 891
- US-A- 4 719 038
- US-A- 4 765 871
- US-A1- 2004 163 740
- US-A1- 2005 118 337
- US-A1- 2008 131 721
- US-B1- 7 514 153
- H. W. Beiz, "DELTA-TONE, eine anorganischeBeschichtung mit hohenKorrosionsschutzeigenschaften", Sonderdruck aus HeftNr. 6, Band 83 (1992), Galvanotechnik, Eugen G. LeuzeVerlag, Bad Saulgau seiten 3-8
- W. Beiz, "Hochvernetzte organische Microschicht Delta-Seal", Sonderdruck ausHeft Nr. 10, Band 85 (1994),Galvanotechnik, Eugen G. Leuze Verlag, Bad Saulgau

## Beschreibung

Die vorliegende Erfindung betrifft eine Multilayerbeschichtung sowie ein Herstellungsverfahren für diese Multilayerbeschichtung.

Die Wasserstoffwiederversprödung (engl.: hydrogen re-embrittlement) eines beschichteten Stahls kann zur einer deutlichen Verschlechterung der Eigenschaften des Stahls führen. Hierbei bewirkt eine Ablagerung von einzelnen Wasserstoffatomen in der Gitterstruktur des Stahls ein Ansteigen des Drucks in der Gittermatrix und führt zu einer nachteiligen Veränderung der Stahlsprödigkeit. Dabei kann es in der Folge zu einer wasserstoffinduzierten Rissbildung des Stahls kommen, wodurch die einem Stahl im Normalfall zugeordneten Eigenschaften bezüglich Festigkeit nicht mehr eingehalten werden können. Insbesondere im Bereich der Luftfahrt, in dem wesentliche Bauteile, wie das Hauptfahrwerk, das Getriebe oder Bolzen aus Stahl gefertigt werden, würde eine solche Rissbildung verheerende Konsequenzen mit sich bringen.

Typischerweise tritt eine Wiederversprödung eines beschichteten hochfesten Stahls als Folge einer Korrosion auf. Hierbei entsteht an der Oberfläche des hochfesten Stahls und/oder der Beschichtung atomarer Wasserstoff, entweder durch eine Wasserstoffkorrosion oder eine andere chemische Reaktion. Der atomare Wasserstoff diffundiert teilweise in den Werkstoff (=Stahl) bevor eine Kombination zu einem nicht diffusionsfähigem H₂-Molekül stattfindet. Der in den Werkstoff eindiffundierte atomare Wasserstoff lagert sich an Gitterfehlstellen in der Gitterstruktur des Stahls an und führt zu einer Versprödung des Stahls, so dass durch die damit einhergehende Druckerhöhung im Inneren des Stahls ein Sprödriss oder eines Sprödbruch auftreten kann.

Die Offenbarungen der US 7,514,153 B1 und der EP 1 683 891 A1 zeigen dabei eine Multilayerbeschichtung, die die Merkmale des Oberbegriffs aufweist.

Die EP 0 508 306 A1 offenbart ein Verfahren zur Korrosionsschutzbeschichtung von Werkstücken aus Stahl, bei dem die Werkstückoberfläche unterkupfert und verzinkt wird, bevor diese mit einer weiteren Schicht mit metallischen Bestandteilen und organischen Bindemitteln versehen und die weitere Schicht durch Wärmebehandlung ausgehärtet wird.

Aufgabe der vorliegenden Erfindung ist es, eine auf einem hochfesten Stahl, aufbringbare Multilayerbeschichtung zu schaffen, die eine besonders ausgeprägte Korrosionsresistenz sowie eine damit einhergehende Resistenz gegen eine Wasserstoffwiederversprödung aufweist. Somit kann eine Verwendbarkeit der mit der erfindungsgemäßen Multilayerbeschichtung überzogenen Bauteile für einen längeren Zeitraum vorgesehen werden, ohne dass eine Beeinträchtigung aufgrund einer eventuell möglichen Wasserstoffwiederversprödung erfolgt.

Diese Aufgabe wird durch die Multilayerbeschichtung auf einem Bauteil eines Luftfahrzeugs, insbesondere ein Hauptfahrwerk, eine Schubstange, ein Getriebe oder einen Bolzen, nach Anspruch 1 gelöst. Die erfindungsgemäße Multilayerbeschichtung wird demnach erhalten durch Umsetzen der im Anspruch aufgeführten Merkmale. Dabei ist es vorzuziehen, dass die oben dargestellten Schritte zum Erhalten der Multilayerbeschichtung in der angegebenen Reihenfolge ausgeführt werden.

Erfindungsgemäß wird als ZnNi-Schicht, die auf das Trägermaterial aufgebracht wird, ein LHE-ZnNi, also ein Low Hydrogen Embrittlement-ZnNi, verwendet. Als Trägermaterial für die ZnNi-Schicht ist ein hochfester Stahl wie beispielsweise 300M oder AISI 4340 vorgesehen.

Vorzugsweise weisen der oder die metallpigmentierten Topcoats eine organische oder eine anorganische Matrix bzw. Bindematrix auf, wobei eine organische Bindematrix bevorzugt ist.

Nach Durchführen der Wärmebehandlung, die auch den Zweck hat etwaige Wasserstoffatome, die bei dem Aufbringen der ZnNi-Schicht auf das Trägermaterial erzeugt worden sind, auszugasen, wird einer (oder mehrere) metallpigmentierte Topcoats auf die ZnNi-Schicht aufgebracht. Der oder die metallpigmentierten Topcoats bestehen aus einer Mischung von Zink- und Aluminiumlamellen, die durch eine anorganische oder organische Matrix verbunden sind. Die Schicht kann durch eine Spritzapplikation oder ein Tauchschleuderverfahren aufgebracht werden. Das Aufbringen des metallpigmentierten Topcoats erfolgt vorzugsweise unter Raumtemperatur, bei einer Luftfeuchtigkeit von 30 bis 80% rel.H.

Danach wird eine zweite Wärmebehandlung ausgeführt, die dazu dient, den metallpigmentierten Topcoat einzubrennen. Hierbei kann ein Umluftofen verwendet werden, der so geregelt ist, dass die Oberflächentemperatur des Topcoats sich in einem Temperaturbereich von 180° bis 200°C befindet. Die Dauer der Wärmebehandlung ist mindestens 30 Minuten.

Das Ergebnis ist eine Multilayerbeschichtung, die einen hervorragenden Korrosionsschutz bietet. Der metallpigmentierte Topcoat ist hierbei porös bzw. diffusionsoffen ausgebildet, sodass die Multilayerbeschichtung elektrochemisch aktiv ist. Somit bleibt der kathodische Schutz erhalten. Zudem ist der Korrosionsstrom i_{corr} bevorzugt kleiner 5 µA/cm².

Die Haftfestigkeit der Multilayerbeschichtung ist bei einem Anbringen auf einem hochfesten Stahl größer als 4N/mm² in einem Stirnabzugsversuch und weist nur vereinzelt kohäsives Versagen auf.

Zudem bewirkt die Multilayerbeschichtung eine Verringerung der Korrosionsrate der ZnNi-Schicht. Es ergibt sich auch eine Verringerung der Korrosionsrate im Vergleich zu einer unbeschichteten oder überlackierten Variante einer auf einem Trägermaterial aufgebrachten ZnNi-Schicht. Besonders vorteilhaft ist, dass die Multilayerbeschichtung eine Wasserstoffversprödung bei einer Korrosionsbelastung praktisch unterbindet. Das Verhalten ist also gegenüber korrosionsbedingten, wasserstoffinduzierten Schädigungen besser als ein bloßer Überzug eines Trägermaterials, beispielsweise einem Stahl oder hochfesten Stahl, mit einem LHE-ZnNi.

Vorzugsweise ist die Dicke der LHE-ZnNi-Schicht der erfindungsgemäßen Multilayerbeschichtung höchstens 30 µm, vorzugsweise höchstens 20 µm dick. Der organische Anteil ist kleiner als 100 Milligramm pro Liter.

Vorteilhaft ist ebenfalls, wenn die Trockenschichtdicke des oder der metallpigmentierten Topcoats höchstens 10 µm, vorzugsweise höchstens 7 µm, bevorzugterweise höchstens 5 µm beträgt. Hierbei wird die Trockenschichtdicke des Topcoats nach der zweiten Wärmebehandlung bestimmt.

Ein weiteres optionales Merkmal der vorliegenden Erfindung ist, dass vor einem Aufbringen einer LHE-ZnNi-Schicht auf ein Trägermaterial das Trägermaterial mit einer Intensität von höchstens 0,1 mm Almen A gestrahlt wird. Das Abstrahlen des Trägermaterials kann beispielsweise mit Edelkorund weiß F180 (=EKF180) erfolgen.

Die Almenintensitätsmessung stellt eine Möglichkeit zum Vergleich verschiedener Strahlprozesse dar. Dabei wird die Verformung, die der Strahlprozess an einer definierten Probe hervorruft, bestimmt. Die Aussage 0,1 mm Almen A gibt an, dass ein Prüfstreifen vom Typ A, der eine Dicke von 1,29 mm aufweist, zur Intensitätsmessung verwendet worden ist. Unterzieht man diesen Streifen dem Strahlprozess so weist er an seinem Sättigungspunkt (Verdopplung der Strahldauer ergibt nur noch eine 10%-ige Zunahme einer Durchbiegung) eine Biegeverformung von 0,1 mm auf. Da das Messen mit Hilfe der Almenintensitätsmessung im Stand der Technik bekannt ist, wird nicht weiter im Detail auf dieses Verfahren eingegangen. Der Effekt des Strahlens ist, dass das Trägermaterial bzw. der Stahl von etwaigen Verunreinigungen befreit wird.

Darüber hinaus ist es möglich, die LHE-ZnNi-Schicht vor einem Aufbringen des metallpigmentierten Topcoats zu passivieren. Die Passivierung kann vor oder nach der ersten Wärmebehandlung erfolgen und mit Chrom (VI) oder ohne Chrom (VI) durchgeführt werden.

Ferner kann nach dem Aufbringen des metallpigmentierten Topcoats und vor dem Ausführen der zweiten Wärmebehandlung eine Ablüftzeit von mindestens 5 Minuten, vorzugsweise mindestens 10 Minuten, bevorzugterweise mindestens 20 Minuten, vorgesehen sein.

Darüber hinaus betrifft die vorliegende Erfindung ein Verfahren zur Herstellung einer Multilayerbeschichtung auf einem hochfesten Stahl mit den im Anspruch 7 aufgeführten Merkmalen.

Der oder die metallpigmentierten Topcoats weisen vorzugsweise eine organische oder anorganische Matrix bzw. Bindematrix auf, wobei eine organische Bindematrix bevorzugt ist.

Vorzugsweise wird vor einem Aufbringen einer LHE-ZnNi-Schicht auf das Trägermaterial, das Trägermaterial mit einer Intensität von höchstens 0,1 mm Almen A abgestrahlt. Dies führt zu einer Reinigung des Trägermaterials, sodass eine Abscheidung einer LHE-ZnNi-Schicht wirkungsvoll auf dem Trägermaterial vorgenommen werden kann.

Darüber hinaus kann eine Passivierung der LHE-ZnNi-Schicht vor oder nach der ersten Wärmebehandlung erfolgen. Die Passivierung kann dabei mit oder ohne Chrom (VI) vorgenommen werden.

Vorzugsweise wird nach dem Aufbringen des metallpigmentierten Topcoats eine Ablüftzeit von mindestens 5 Minuten, vorzugsweise mindestens 10 Minuten, bevorzugterweise mindestens 20 Minuten vorgesehen.

Die Erfindung wird nachfolgend anhand der beiliegenden Figuren näher ausgeführt. Dabei steht eine Vielzahl der Figuren in Zusammenhang mit einer durchgeführten Versuchsreihe, die die Vorteile der erfindungsgemäßen Multilayerbeschichtung aufzeigt. Es zeigen:
- Fig. 1: einen Vergleich der Korrosionsresistenz der erfindungsgemäßen Beschichtung gegenüber herkömmlichen Beschichtungen,
- Fig. 2a-c: ein Zeitstand-Diagramm, eine vergrößerte Aufnahme einer Bruchfläche und eine REM-Aufnahme einer Bruchfläche eines mit der erfindungsgemäßen Multilayerschicht beschichteten Stahls,
- Fig. 3a-e: ein Zeitstand-Diagramm, eine vergrößerte Aufnahme einer Bruchfläche und zwei REM-Aufnahmen einer Bruchfläche eines mit der erfindungsgemäßen Multilayerschicht beschichteten Stahls und
- Fig. 4a-c: ein Zeitstand-Diagramm, eine vergrößerte Aufnahme einer Bruchfläche und eine REM-Aufnahme einer Bruchfläche eines mit der einer herkömmlichen ZnNi-Schicht beschichteten Stahls.

Der in der Mitte angeordnete Streifen zeigt einen Stahl, der nur mit einer ZnNi-Schicht beschichtet worden ist und die beiden rechten Streifen zeigen einen Stahl, der nur mit einem metallpigmentierten Topcoat überzogen worden ist, jedoch keine ZnNi-Schicht aufweist.

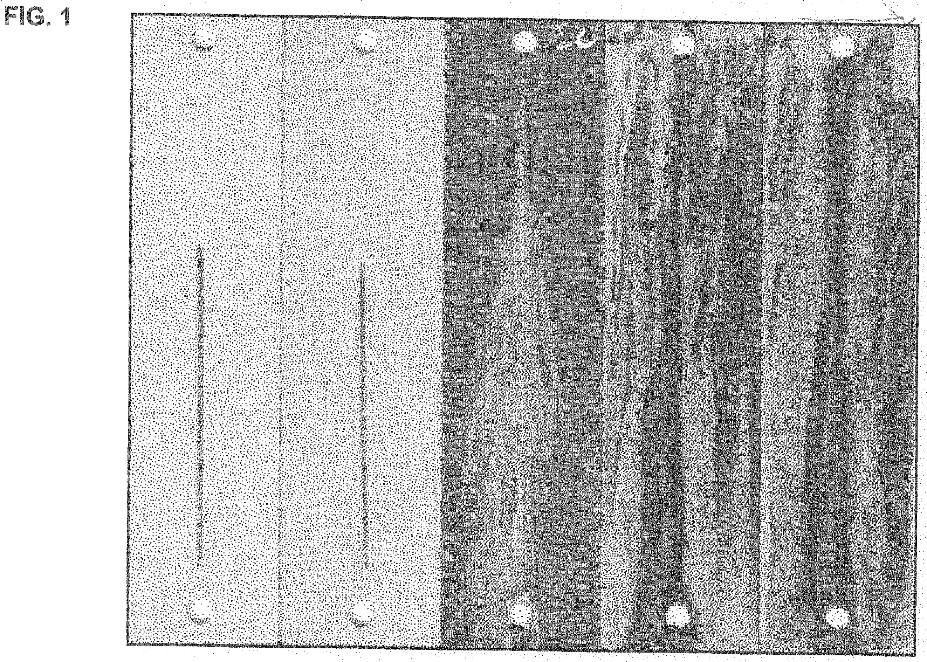

Die in Fig. 1 dargestellten Beschichtungen wurden alle einem identischen Korrosionstest unterzogen, sodass nun die Korrosionsresistenz der verschiedenen Beschichtungen anhand einer optischen Prüfung bewertet werden kann. Man erkennt auf den ersten Blick, dass die erfindungsgemäße Multilayerbeschichtung eine sehr viel bessere Korrosionsresistenz besitzt als die ebenfalls in Fig.1 gezeigten nicht erfindungsgemäßen Beschichtungen. Es sind fast keinerlei Korrosionsspuren zu erkennen. Insbesondere die beiden rechten Streifen, die keine Zink-Nickel-Schicht aufweisen, sind sehr stark durch Korrosion angegriffen. Einen etwas weniger fortgeschrittenen Korrosionszustand weist der mittig angeordnete Streifen eines mit einer Zink-Nickel-Schicht beschichteten Stahls auf.

Dieses Ergebnis bestätigt sich da bei einem Reembrittlement-Versuch entsprechend NAVAL Warfare (45%/24h+5%/1h) das Verhalten der erfindungsgemäßen Multilayerbeschichtung auf einem Stahl, insbesondere einem hochfesten Stahl, gegenüber korrosionsbedingten, wasserstoffinduzierten Schädigungen besser ist als ein Stahl mit einer LHE-ZnNi-Schicht.

Der Gesamteindruck, dass die erfindungsgemäße Multilayerbeschichtung einer herkömmlichen ZnNi-Schicht überlegen ist, bestätigt sich auch aufgrund der nachfolgend wiedergegebenen Versuchsreihe.

Hierbei werden Incremental-Step-Load Prüfungen unter Medienbelastung in 3,5 % NaCl-Lösung bei Raumtemperatur an Kerbzugproben aus dem Werkstoff 300M mit unterschiedlichen Beschichtungsvarianten nach ASTM F519 durchgeführt. Nach der Prüfung erfolgt eine Bruchflächenanalyse zur Ermittlung von betriebsbedingten wasserstoffinduzierten Schädigungen durch die Korrosionsbelastung (Reembrittlement-Prüfungen).

Die Versuchsreihe umfasst insgesamt folgende Proben:
• 2 Sätze à 4 Kerbzugproben, Nummer: la, im Zustand: LHE ZnNi (LLI) + Passivierung + WBH 190°C/23 h +TC P35 (5 µm) + WBH 190°C/30 min (erfindungsgemäß)
• 2 Sätze à 4 Kerbzugproben, Nummer: Ib, im Zustand: LHE ZnNi (LLI) + Passivierung + WBH 190°C/23 h +TC P35 (10 µm) + WBH 190°C/30 min (erfindungsgemäß)
• 1 Satz à 4 Kerbzugproben, Nummer: Ic, im Zustand: LHE ZnNi (LU) + Passivierung + WBH 190°C/23 h (Vergleichsbeispiel)

Die orientierenden Reembrittlement-Prüfungen werden nach dem unten angegebenen Prüfablauf durchgeführt.

### Prüfablauf Reembrittfement-Prüfungen:

**Tabelle 1: Prüfablauf Reembrittlement-Prüfungen**

| Vorbelastung | Bestandene Embrittlement-Prüfung |
|---|---|
| Inkrementelle stufenweise Belastung (Incremental-Step-Load) | 45 % F_{mK} für 24 Stunden |
| | Anschließend stündliche Erhöhung um 5% F_{mK} |
| Prüfdauer | Max. 24 + 10 Stunden |
| Temperatur | Raumtemperatur (20 ± 3°C) |
| Prüfmedium | 175 ± 2 ml 3,5%-ige NaCl-Lösung, pH-Wert 6,9 ± 0,1 nicht mit Stickstoff gespült, natürlich belüftet |

### la - LHE ZnNi (LLI) + Passivierung + WBH 190°C/23 h +TC P35 (5 µm) + WBH 190°C/30 min

In dieser Probe werden zwei Sätze mit jeweils 4 Kerbzugproben erstellt. Dabei wird als Zink-Nickel-Schicht ein LHE ZnNi (LLI) mit einer Passivierung verwendet, das einer ersten Wärmebehandlung bei 190°C für die Dauer von 23 Stunden unterzogen wird. Dazu wird ein Topcoat (=Beschichtung) vom Typ P35 der Firma Magni als metallpigmentierter Topcoat verwendet. Diese wird mit einer Dicke von 5 µm aufgetragen. Anschließend wird eine zweite Wärmebehandlung ausgeführt, die den Zweck hat, den metallpigmentierten Topcoat einzubrennen. Die zweite Wärmebehandlung bei 190 °C dauert 30 Minuten. In Kurzform lässt sich dies wie folgt zusammenfassen: LHE ZnNi (LLI) + Passivierung + WBH 190°C/23 h +TC P35 (5 µm) + WBH 190°C/30 min.

Als Werkstoff, der als Trägermaterial für die Multilayerbeschichtung dient, wird ein Stahl vom Typ 300M, Charge 065/Z (Fₘₖ = 42960 N) verwendet.

Die Prüfparameter sind wie folgt: 45% F_{mK} 24 h + 5% F_{mK} je 1 h; Max. 24 + 10 Stunden; Prüfmedium 3,5 %-ige NaCl, pH7; Prüfstand: Zwick Z050.

**Tabelle 2: Ergebnis der Prüfung an Probe Ia**

| **Ergebnisse** | | | | | |
|---|---|---|---|---|---|
| **Satz** | **Probe** | **Standzeit in Stunden** | **max. Kraft in % F_{mK} /N** | **Ergebnis (> 50% bestanden)** | **Bemerkung** |
| 1 | 1 | 33:00:36 | 90 / 40500 | **bestanden** | - |
| | 2 | 33:01:12 | 90 / 40500 | **bestanden** | - |
| | 3 | 33:01:48 | 90 / 40500 | **bestanden** | - |
| | 4 | 33:02:24 | 90 / 40500 | **bestanden** | - |
| 2 | 1 | 33:00:36 | 90 / 40800 | **bestanden** | - |
| | 2 | 33:01:12 | 90 / 40800 | **bestanden** | - |
| | 3 | 33:01:48 | 90 / 40800 | **bestanden** | - |
| | 4 | 33:01:48 | 90 / 40800 | **bestanden** | - |

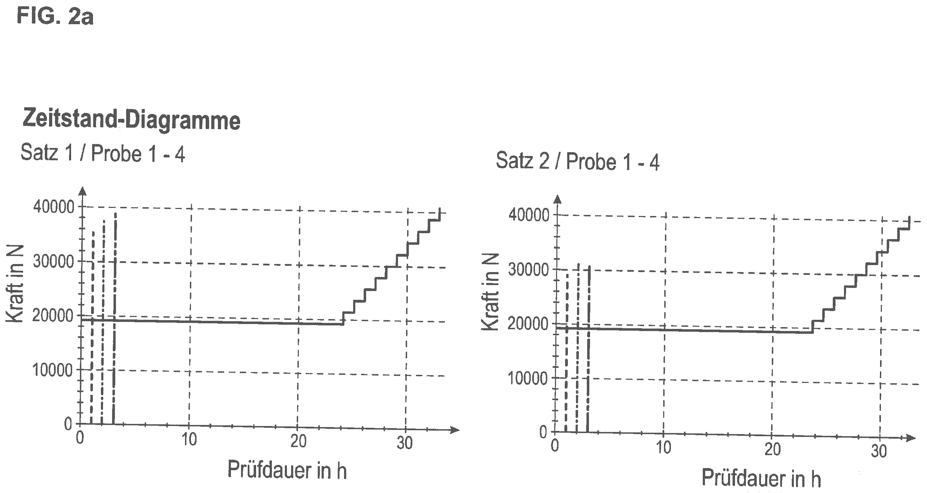

Die Zeitstand-Diagramme einer der Probe 1-4 von Satz 1 und von Satz 2 sind in Fig. 2a angegeben.

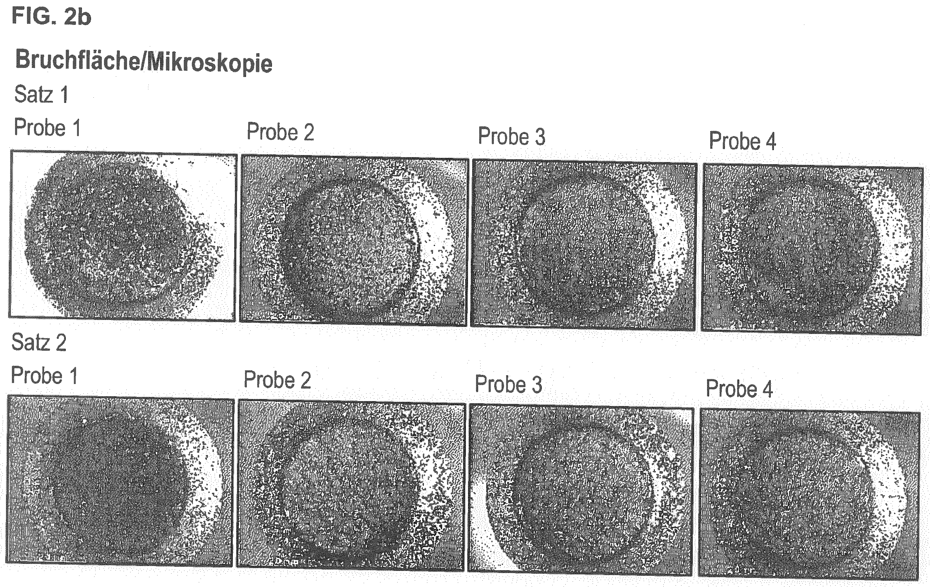

Darüber hinaus ist eine mikroskopische Darstellung der Bruchflächen jeder Probe in Fig. 2b. gezeigt.

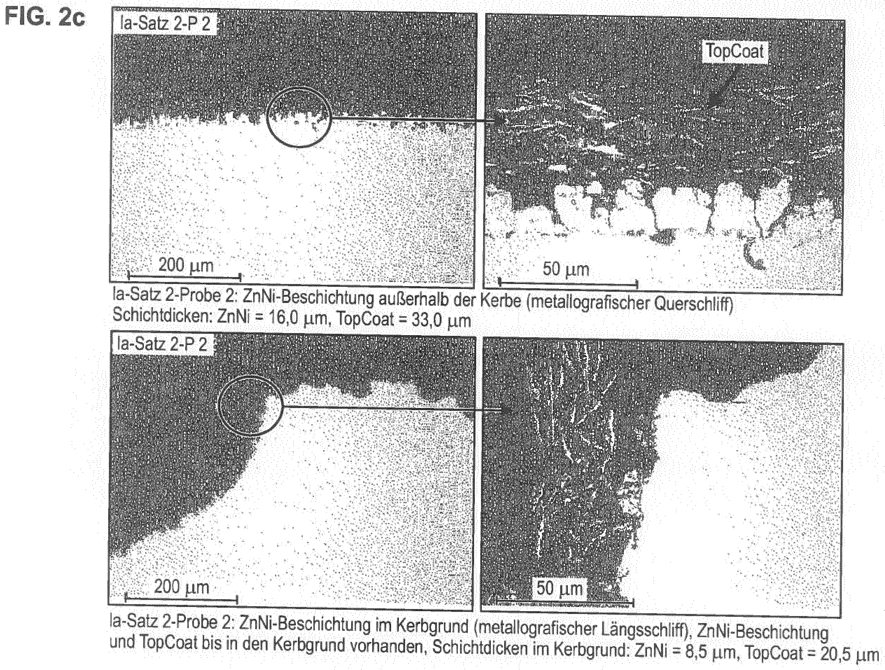

Fig. 2c zeigt 4 Darstellungen einer Probe, in denen vergrößerte Aufnahmen der Schichtdicken im Kerbgrund der Kerbzugprobe und außerhalb der Kerbe sichtbar sind.

Die Incremental-Step-Load-Prüfungen zeigen, dass beide untersuchten Sätze à 4 Proben einer Prüflast von 90% F_{mK} standhielten. Die kürzeste Prüfdauer beträgt bei beiden Sätzen 33 h 36 s. Die metallografischen Analysen der Variante la zeigen, dass die ZnNi-Beschichtung an der untersuchten Probe durchgängig vorhanden ist. Die Schichtdicke des metallpigmentierten Topcoats (ZnL-Schicht)) beträgt im Mittel 16,0 µm. Die Schichtdicke des TopCoat beträgt etwa 33,0 µm (Fig. 2c, obere Darstellungen). Im Kerbgrund weist die ZnNi-Beschichtung eine Dicke von 8,5 µm und die Topcoat-Beschichtung eine Dicke von 20,5 µm auf (Fig. 2c, untere Darstellungen).

Die metallografischen Analysen der Variante la zeigen, dass die ZnNi-Beschichtung an der untersuchten Probe durchgängig vorhanden ist. Die Schichtdicke der ZnNi-Beschichtung beträgt im Mittel 16,0 µm. Die Schichtdicke des TopCoat beträgt etwa 33,0 µm (Fig. 2c, oberen Darstellungen). Im Kerbgrund weist die ZnNi-Beschichtung eine Dicke von 8,5 µm und die TopCoat-Beschichtung eine Dicke von 20,5 µm auf (Fig. 2c, untere Darstellungen).

### Ib - LHE ZnNi (LLI) + Passivierung + WBH 190°C/23 h + TC P35 (10 µm) + WBH 190°C/30 min

In dieser Probe werden zwei Sätze mit jeweils 4 Kerbzugproben erstellt. Dabei wird als Zink-Nickel-Schicht ein LHE ZnNi (LLI) mit einer Passivierung verwendet, das einer ersten Wärmebehandlung bei 190°C für die Dauer von 23 Stunden unterzogen wird. Dazu wird ein Topcoat (TC) vom Typ P35 der Firma Magni als metallpigmentierter Topcoat verwendet. Dieser wird mit einer Dicke von 10 µm aufgetragen. Anschließend wird eine zweite Wärmebehandlung ausgeführt, die u.a. den Zweck hat, den metallpigmentierten Topcoat einzubrennen. Die zweite Wärmebehandlung bei 190 °C dauert 30 Minuten. In Kurzform lässt sich dies wie folgt zusammenfassen: LHE ZnNi (LLI) + Passivierung + WBH 190°C/23 h +TC P35 (10 µm) + WBH 190°C/30 min.

Als Werkstoff, der als Trägermaterial für die Multilayerbeschichtung dient, wird ein Stahl vom Typ 300M, Charge 065/Z (Fₘₖ = 42960 N) verwendet.

Die Prüfparameter sind wie folgt: 45% F_{mK} 24 h + 5% F_{mK} je 1 h; Max. 24 + 10 Stunden; Prüfmedium 3,5 %-ige NaCl, pH7; Prüfstand: Zwick Z050.

**Tabelle 3: Ergebnis der Prüfung an Probe Ib**

| **Ergebnisse** | | | | | |
|---|---|---|---|---|---|
| **Satz** | **Probe** | **Standzeit in Stunden** | **max. Kraft in % F_{mK} / N** | **Ergebnis (> 50% bestanden)** | **Bemerkung** |
| 1 | 1 | 33:00:36 | 90 / 40600 | **bestanden** | - |
| | 2 | 33:01:12 | 90 / 40600 | **bestanden** | - |
| | 3 | 33:01:48 | 90 / 40600 | **bestanden** | - |
| | 4 | 33:02:24 | 90 / 40600 | **bestanden** | - |
| 2 | 1 | 26:08:24 | 55 / 25800 | **bestanden** | - |
| | 2 | 26:09:00 | 55 / 25800 | **bestanden** | - |
| | 3 | 26:09:42 | 55 / 25800 | **bestanden** | - |
| | 4 | 26:10:30 | 55 / 25800 | **bestanden** | - |

Die Zeitstand-Diagramme einer der Probe 1-4 von Satz 1 und von Satz 2 sind in Fig. 2a angegeben.

Darüber hinaus ist eine mikroskopische Darstellung der Bruchflächen jeder Probe in Fig. 2b. gezeigt.

Die Incremental-Step-Load-Prüfungen zeigen, dass die beiden untersuchten Probensätze deutlich unterschiedlichen Prüflasten standhielten. So hielten die vier Proben des Satzes 1 einer Prüflast von 90% F_{mK} stand, die des Satzes zwei nur 55% Fₘₖ. Die kürzeste Prüfdauer beträgt bei Satz eins 33 h 36 s und bei Satz zwei 26 h 8 min 24 s.

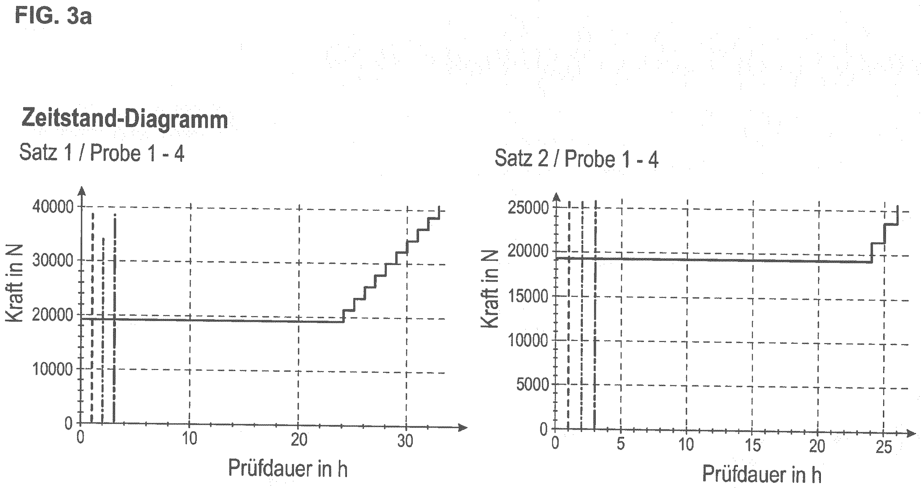

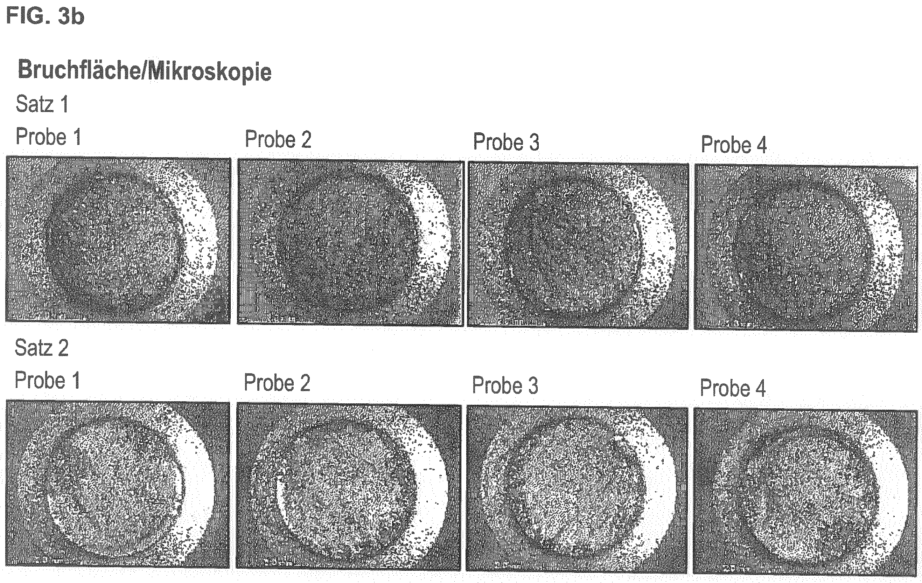

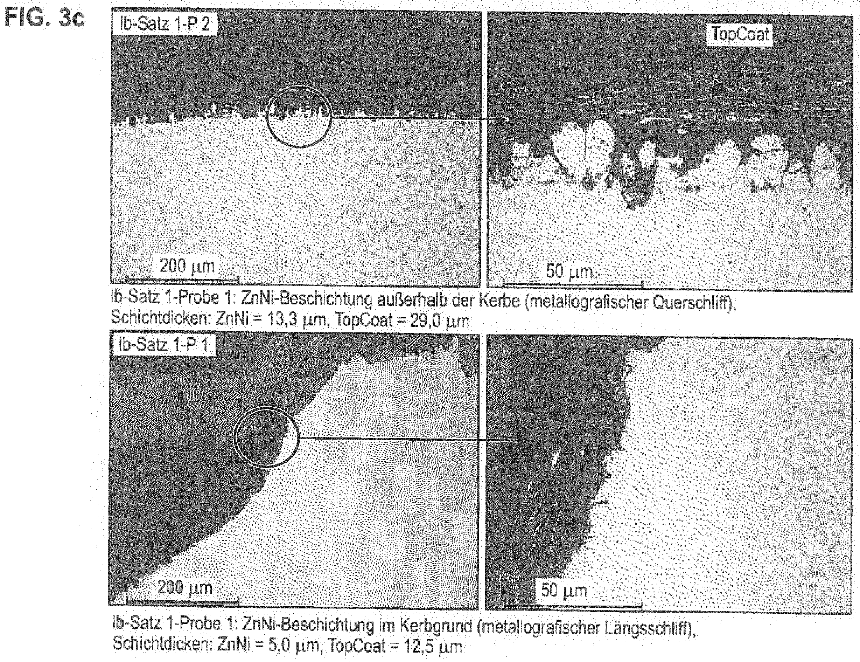

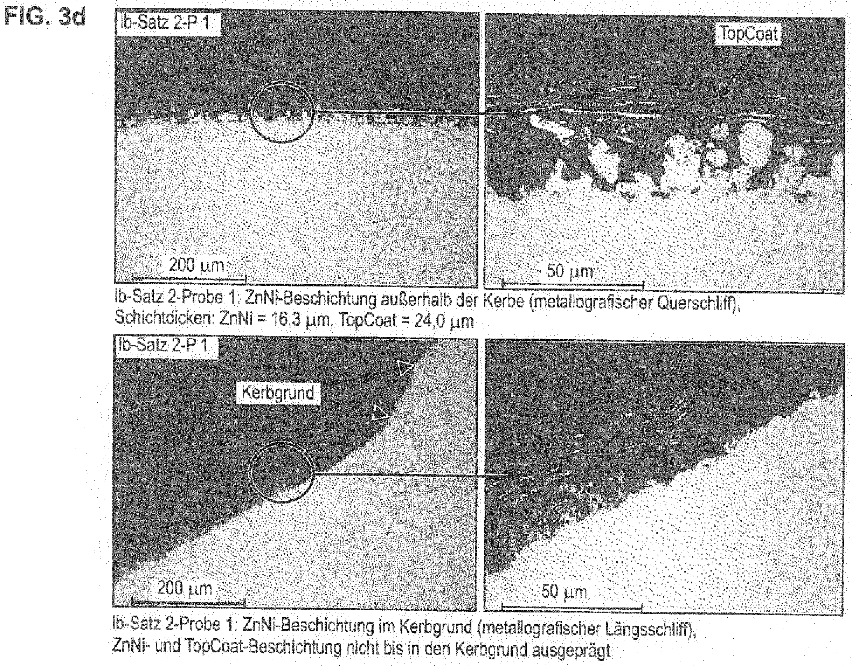

Die metallografischen Analysen an Probe 1, Satz 1 zeigen, dass die ZnNi-Beschichtung im Mittel eine Dicke von 13,3 µm und die Topcoat-Beschichtung eine Dicke von 29,0 µm aufweist (Fig. 3c, obere Darstellungen). An Probe 1, Satz 2 betragen die Schichtdicken im Mittel 16,3 µm bei ZnNi und 24,0 µm beim TopCoat (Fig. 3d, obere Darstellungen).

Die Untersuchungen zeigen weiter, dass die ZnNi-Beschichtung an den untersuchten Sätzen 1 und 2 im Bereich des Kerbgrunds unterschiedlich ausgeprägt ist. So weist Probe 1, Satz 1 bis in den Kerbgrund sowohl eine ZnNi-Beschichtung mit einer Dicke von 5,0 µm als auch eine Topcoat-Beschichtung von 12,5 µm (Fig. 3c, untere Darstellungen) auf. Probe 1, Satz 2 weist hingegen nur Spuren der ZnNi-Beschichtung auf (Fig. 3d, untere Darstellungen). Weiter ist die Topcoat-Beschichtung bei dieser Probe nicht durchgängig bis in den Kerbgrund ausgeprägt.

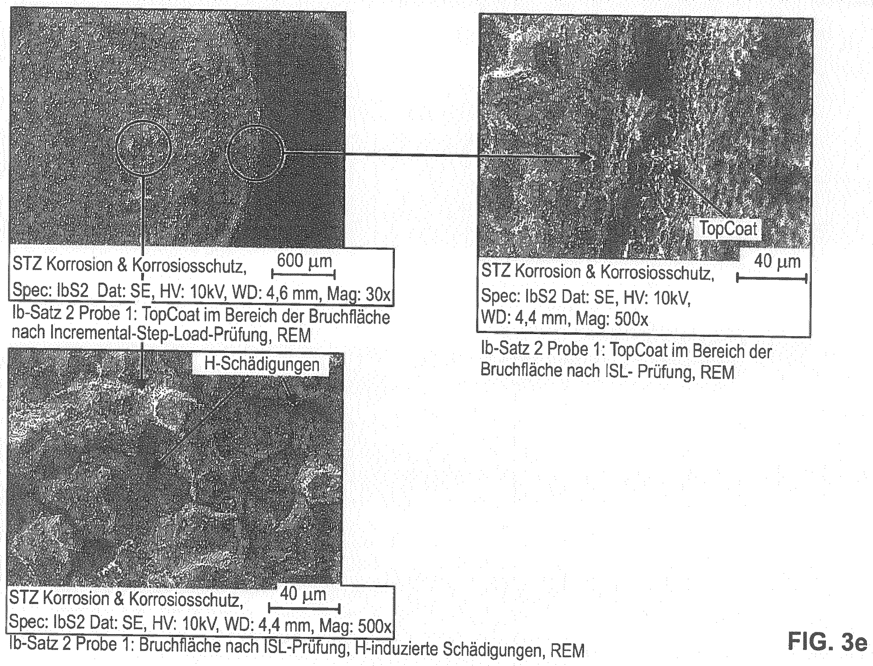

Die rasterelektronenmikroskopischen Bruchflächenanalyse der Probe 1 des zweiten Satzes zeigt, dass diese nach der Incremental-Step-Load-Prüfung deutliche Schädigungen infolge Wasserstoffversprödung aufweist (Fig. 3e, untere Darstellung). Die obere rechte Darstellung der Fig. 3e zeigt die Topcoat-Beschichtung im Bereich des Kerbgrunds.

Die metallografischen Analysen an Probe 1, Satz 1 zeigen, dass die ZnNi-Beschichtung im Mittel eine Dicke von 13,3 µm und die Topcoat-Beschichtung eine Dicke von 29,0 µm aufweist (Fig. 3c, obere Darstellungen). An Probe 1, Satz 2 betragen die Schichtdicken im Mittel 16,3 µm bei ZnNi und 24,0 µm beim TopCoat (Fig. 3d, obere Darstellungen).

Die Untersuchungen zeigen weiter, dass die ZnNi-Beschichtung an den untersuchten Sätzen 1 und 2 im Bereich des Kerbgrunds unterschiedlich ausgeprägt ist. So weist Probe 1, Satz 1 bis in den Kerbgrund sowohl eine ZnNi-Beschichtung mit einer Dicke von 5,0 µm als auch eine Topcoat-Beschichtung von 12,5 µm (Fig. 3c, untere Darstellungen) auf. Probe 1, Satz 2 weist hingegen nur Spuren der ZnNi-Beschichtung auf (Fig. 3e, untere Darstellungen). Weiter ist die Topcoat-Beschichtung nicht durchgängig bis in den Kerbgrund ausgeprägt.

Die rasterelektronenmikroskopischen Bruchflächenanalyse der Probe 1 des zweiten Satzes zeigt, dass diese nach der Incremental-Step-Load-Prüfung Schädigungen infolge Wasserstoffversprödung aufweist (Fig. 3e, untere Darstellung). Die oberen Darstellungen der Fig. 3e zeigen die Topcoat-Beschichtung im Bereich des Kerbgrunds.

### Ic - LHE ZnNi (LLI) + Passivierung + WBH 190°C/23 h

In dieser Versuchsreihe wird ein Satz mit 4 Kerbzugproben erstellt, wobei der hier auf den Stahl angebrachte Überzug nicht die erfindungsgemäße Multilayerschicht ist.

Es wird als Beschichtung für den Stahl von der Sorte 300M eine Zink-Nickel-Schicht, genauer eine Schicht eines LHE ZnNi (LLI), mit einer Passivierung verwendet, das einer Wärmebehandlung bei 190°C für die Dauer von 23 Stunden unterzogen wird. In Kurzform lässt sich dies wie folgt zusammenfassen: LHE ZnNi (LLI) + Passivierung + WBH 190°C/23 h.

Dabei wird auf die ZnNi-Schicht keine weitere Beschichtung aufgebracht. Auch erfolgt keine zweite Wärmebehandlung.

Als Werkstoff, der als Trägermaterial für die Beschichtung dient, wird ein Stahl vom Typ 300M, Charge 065/Z (Fₘₖ = 42960 N) verwendet.

Die Prüfparameter sind wie folgt: 45% F_{mK} 24 h + 5% F_{mK} je 1 h; Max. 24 + 10 Stunden; Prüfmedium 3,5 %-ige NaCl, pH7; Prüfstand: Zwick Z050.

**Tabelle 4: Ergebnis der Prüfung an Probe Ic**

| **Ergebnisse** | | | | | |
|---|---|---|---|---|---|
| **Satz** | **Probe** | **Standzeit in Stunden** | **max. Kraft in % F_{mK} / N** | **Ergebnis (> 50% bestanden)** | **Bemerkung** |
| 1 | 1 | 26:10:12 | 55 / 25800 | **bestanden** | - |
| | 2 | 26:15:00 | 55 / 25800 | **bestanden** | - |
| | 3 | 26:16:12 | 55 / 25800 | **bestanden** | - |
| | 4 | 26:17:24 | 55 / 25800 | **bestanden** | - |

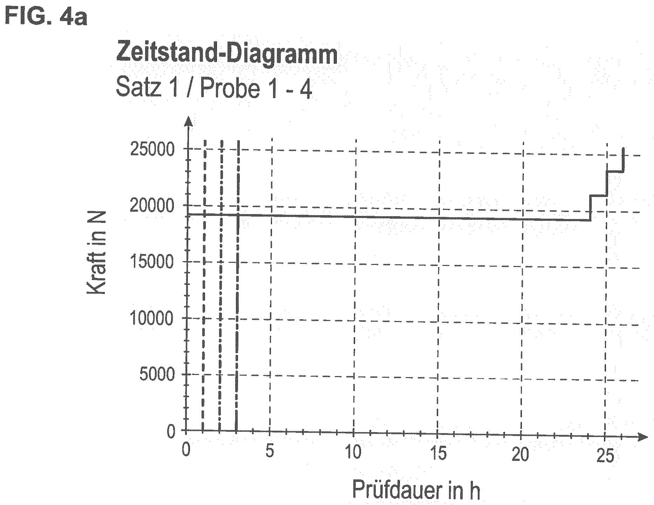

Das Zeitstand-Diagramm der Probe 1-4 ist in Fig. 4a angegeben.

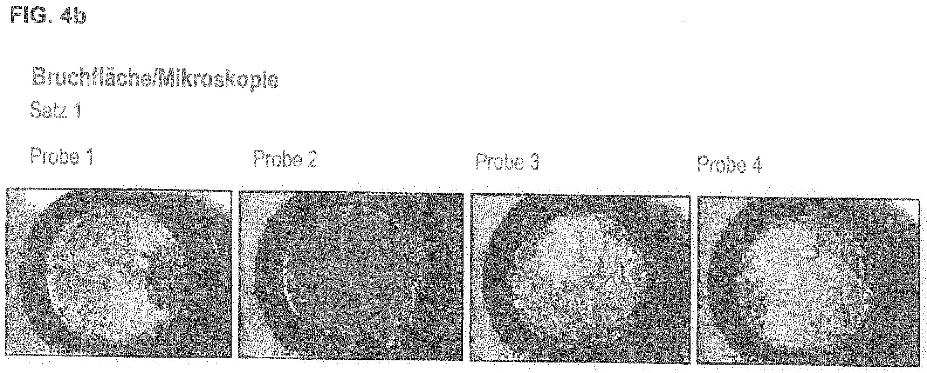

Darüber hinaus ist eine mikroskopische Darstellung der Bruchflächen jeder Probe in Fig. 4b. gezeigt.

Die Incremental-Step-Load-Prüfungen zeigen, dass die untersuchten Proben einer Prüflast von 55% F_{mK} standhielten. Die kürzeste Prüfdauer beträgt 26 h 10 min 12 s.

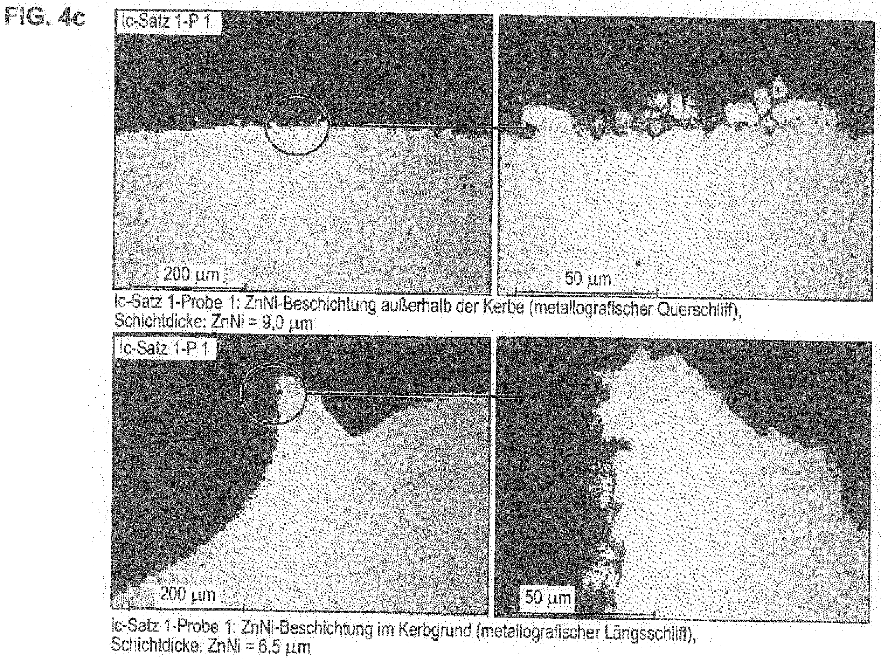

Die metallografische Analyse zeigt, dass die ZnNi-Beschichtung bis in den Kerbgrund vorhanden ist. Die Schichtdicke der ZnNi-Beschichtung beträgt im Mittel 9,0 µm und im Kerbgrund 6,5 µm (Fig. 4c).

Nachfolgend ist in der Tabelle 5 eine Zusammenfassung der Ergebnisse in einer Übersichtsform dargestellt.

**Tabelle 5: Tabellarische Zusammenfassung der Ergebnisse der Reembrittlement-Prüfung**

| **Proben- Bez.** | **Zustand** | **Satz** | **Nr.** | **max. Kraft in % F_{mK} / N** | **Prüfdauer h:min:s** | **Ergebnis (> 50% bestanden)** |
|---|---|---|---|---|---|---|
| Ia | LHE ZnNi (LLI) + Passivierung + WBH 190°C/23 h + TC P35 (5 µm) + WBH 190°C/30 min | 1 | 1 | 90 / 40500 | 33:00:36 | bestanden |
| | | | 2 | 90 / 40500 | 33:01:12 | bestanden |
| | | | 3 | 90 / 40500 | 33:01:48 | bestanden |
| | | | 4 | 90 / 40500 | 33:02:24 | bestanden |
| | | 2 | 1 | 90 / 40800 | 33:00:36 | bestanden |
| | | | 2 | 90 / 40800 | 33:01:12 | bestanden |
| | | | 3 | 90 / 40800 | 33:01:48 | bestanden |
| | | | 4 | 90 / 40800 | 33:01:48 | bestanden |
| Ib | LHE ZnNi (LLI) + Passivierung + WBH 180°C/23 h + TC P35 (10 µm) + WBH 190°C/30 min | 1 | 1 | 90 / 40600 | 33:00:36 | bestanden |
| | | | 2 | 90 / 40600 | 33:01:12 | bestanden |
| | | | 3 | 90 / 40600 | 33:01:48 | bestanden |
| | | | 4 | 90 / 40600 | 33:02:24 | bestanden |
| | | 2 | 1 | 55 / 25800 | 26:08:24 | bestanden |
| | | | 2 | 55 / 25800 | 26:09:00 | bestanden |
| | | | 3 | 55 / 25800 | 26:09:42 | bestanden |
| | | | 4 | 55 / 25800 | 26:10:30 | bestanden |
| Ic | LHE ZnNi (LLI) + Passivierung + WBH 190°C/23 h | 1 | 1 | 55 / 25800 | 26:10:12 | bestanden |
| | | | 2 | 55 / 25800 | 26:15:00 | bestanden |
| | | | 3 | 55 / 25800 | 26:16:12 | bestanden |
| | | | 4 | 55 / 25800 | 26:17:24 | bestanden |
| IIe | LHE ZnNi (LLI) + Passivierung + WBH 190°C/23 h | 1 | 1 | 55 / 25800 | 26:07:48 | bestanden |
| | | | 2 | 55 / 25800 | 26:09:36 | bestanden |
| | | | 3 | 55 / 25800 | 26:17:24 | bestanden |
| | + WBH nach LHT4-4103 | | 4 | 55 / 25800 | 26:27:00 | bestanden |

Aus der Tabelle 5 lässt sich ableiten, dass die erfindungsgemäße Multilayerbeschichtung eine hervorragende Korrosionsresistenz aufweist, die den Vergleichsproben überlegen ist, sofern die Schichtanordnung durchgängig ausgebildet ist und nicht wie in der Probe Ib, Satz 2 eine Fehlstelle nahe des Kerbgrunds der Kerbzugprobe besitzt.

Nachfolgend ist eine tabellarische Übersicht über die Schichtdicken der unterschiedlichen Proben gegeben.

**Tabelle 6: Tabellarische Zusammenfassung der Schichtdickenermittlung**

| Proben-Bez. | Satz | Nr. | Schichtdicke in µm | | | | Kommentar |
|---|---|---|---|---|---|---|---|
| | | | Kerbgrund | | Mantelfläche | | |
| | | | ZnNi | TopCoat | ZnNi | TopCoat | |
| | | | Mw* | Mw* | Mw** | Mw** | |
| Ia | 2 | 2 | 8,5 | 20,5 | 16,0 | 33,0 | - |
| Ib | 1 | 1 | 5,0 | 12,5 | 13,3 | 29,0 | - |
| Ib | 2 | 1 | 0,0 | 0,0 | 16,3 | 24,0 | Im Kerbgrund kaum ZnNi und kein TopCoat nachweisbar |
| Ic | 1 | 1 | 6,5 | 0,0 | 9,0 | 0,0 | - |
| IIe | 1 | 1 | 7,5 | 0,0 | 18,7 | 47,0 | |

| | | | | | | | |
|---|---|---|---|---|---|---|---|
| *Mittelwert aus zwei Messwerten **Mittelwert aus drei Messwerten | | | | | | | |

Man erkennt also, dass bei einem Vorhandensein einer erfindungsgemäßen Multilayerschicht die Korrosionsresistenz gegenüber herkömmlichen Beschichtungen deutlich verbessert ist. Dies ist auf die verminderte Wasserstoffversprödung aufgrund der erfindungsgemäßen Multilayerschicht zurückzuführen.

## Patentansprüche

1. Bauteil in einem Luftfahrzeug, das mit einer Multilayerbeschichtung versehen ist, die erhalten worden ist durch Ausführen der Schritte:
(1) Aufbringen einer Low Hydrogen Embrittlement-ZnNi-Schicht, i.e. LHE-ZnNi-Schicht, auf einem hochfesten Stahl,
(2) Vornehmen einer ersten Wärmebehandlung in einem Temperaturbereich von 185-220°C, für einen Zeitraum von mindestens 23 Stunden, und
(3) Aufbringen eines metallpigmentierten Topcoats auf die LHE-ZnNi-Schicht,
**gekennzeichnet durch**
(4) Vornehmen einer zweiten Wärmebehandlung in einem Temperaturbereich von 180-200 °C, für einen Zeitraum von mindestens 30 Minuten, wobei
die Schritte in der angegebenen Reihenfolge (1), (2), (3), (4) ausgeführt werden, und
der Topcoat aus einer Mischung von Zink- und Aluminiumlamellen, die durch eine anorganische oder organische Matrix verbunden sind, besteht.

2. Bauteil nach Anspruch 1, wobei die Dicke der LHE-ZnNi-Schicht höchstens 30 µm, vorzugsweise höchstens 20 µm, beträgt.

3. Bauteil nach einem der vorhergehenden Ansprüche, wobei die Trockenschichtdicke des metallpigmentierten Topcoats nach Schritt (4) höchstens 10 µm beträgt.

4. Bauteil nach einem der vorhergehenden Ansprüche, wobei vor Schritt (1) ein Schritt ausgeführt wird zum
Strahlen des Trägermaterials mit einer Intensität von höchstens 0,1 mm Almen A.

5. Bauteil nach einem der vorhergehenden Ansprüche, wobei zwischen Schritt (2) und Schritt (3) oder zwischen Schritt (1) und Schritt (2) ein Schritt ausgefüht wird zum
Passivieren der LHE-ZnNi- Schicht mit oder ohne Chrom(IV).

6. Bauteil nach einem der vorhergehenden Ansprüche, wobei zwischen Schritt (3) und Schritt (4) ein Schritt ausgeführt wird zum
Lüften des aufgebrachten metallpigmentierten Topcoats für mindestens 5 Minuten, vorzugsweise mindestens 10 Minuten, bevorzugterweise mindestens 20 Minuten.

7. Verfahren zur Herstellung einer Multilayerbeschichtung auf einem hochfesten Stahl, umfassend die Schritte:
(1) Aufbringen einer LHE-ZnNi-Schicht, i.e. LHE-ZnNi-Schicht, auf den hochfesten Stahl,
(2) Vornehmen einer ersten Wärmebehandlung in einem Temperaturbereich von 185-220°C, für einen Zeitraum von mindestens 23 Stunden, und
(3) Aufbringen eines metallpigmentierten Topcoats auf die LHE-ZnNi-Schicht,
**gekennzeichnet durch**
(4) Vornehmen einer zweiten Wärmebehandlung in einem Temperaturbereich von 180-200 °C, für einen Zeitraum von mindestens 30 Minuten, wobei
die Schritte in der Reihenfolge (1), (2), (3), (4) ausgeführt werden, und
der Topcoat aus einer Mischung von Zink- und Aluminiumlamellen, die durch eine anorganische oder organische Matrix verbunden sind, besteht.

8. Verfahren nach Anspruch 7, wobei vor Schritt (1) das Trägermaterial mit einer Intensität von höchstens 0,1 mm Almen A abgestrahlt wird.

9. Verfahren nach Anspruch 7 oder 8, wobei zwischen Schritt (2) und Schritt (3) oder zwischen Schritt (1) und Schritt (2) die LHE-ZnNi-Schicht mit oder ohne Chrom(IV) passiviert wird.

10. Verfahren nach einem der Ansprüche 7-9, wobei zwischen Schritt (3) und Schritt (4) ein Schritt ausgeführt wird, um den aufgebrachten metallpigmentierten Topcoat für mindestens 5 Minuten zu lüften.

## Claims

1. Component in an aircraft which is provided with a multilayer coating obtained by carrying out the steps of:
(1) applying a Low Hydrogen Embrittlement ZnNi layer, i.e. LHE ZnNi layer, to a high-strength steel,
(2) carrying out a first heat treatment in a temperature range from 185-220°C for a time period of at least 23 hours, and
(3) applying a metal-pigmented top coat to the LHE ZnNi layer,
**characterized by**
(4) carrying out a second heat treatment in a temperature range from 180 - 200°C for a time period of at least 30 minutes, wherein
the steps are carried out in the stated order (1), (2), (3), (4), and
the top coat consists of a mix of zinc and aluminum lamellae interconnected by an inorganic or organic matrix.

2. Component of claim 1, wherein the thickness of the LHE ZnNi layer is at most 30 µm, preferably at most 20 µm.

3. Component according to any one of the preceding claims, wherein the dry layer thickness of the metal-pigmented top coat in accordance with step (4) is at most 10 µm.

4. Component according to any one of the preceding claims, wherein, before step (1), a step is carried out for
shot peening the substrate material with an intensity of at most 0.1 mm Almen A.

5. Component according to the preceding claim, wherein between step (2) and step (3), or between step (1) and step (2), a step is carried out for
passivating the LHE ZnNi layer with or without chromium(IV).

6. Component according to any one of the preceding claims, wherein between step (3) and step (4), a step is carried out for
venting the applied metal-pigmented top coat for at least 5 minutes, preferably at least 10 minutes, preferably at least 20 minutes.

7. Method of manufacturing a multilayer coating on a high-strength steel, comprising the steps of:
(1) applying an LHE ZnNi layer, i.e. LHE ZnNi layer, to the high-strength steel,
(2) carrying out a first heat treatment in a temperature range from 185-220°C for a time period of at least 23 hours, and
(3) applying a metal-pigmented top coat to the LHE ZnNi layer,
**characterized by**
(4) carrying out a second heat treatment in a temperature range from 180 - 200°C for a time period of at least 30 minutes, wherein
the steps are carried out in the order (1), (2), (3), (4), and
the top coat consists of a mix of zinc and aluminum lamellae interconnected by an inorganic or organic matrix.

8. Method of claim 7, wherein the substrate material is shot-peened with an intensity of at most 0.1 mm Almen A before step (1).

9. Method of claim 7 or 8, wherein between step (2) and step (3), or between step (1) and step (2), the LHE ZnNi layer is passivated with or without chromium (IV).

10. Method of any one of claims 7 to 9, wherein a step is carried out between step (3) and step (4) to vent the applied metal-pigmented top coat for at least 5 minutes.

## Revendications

1. Élément d'aéronef, qui est pourvu d'un revêtement multicouche, qui est obtenu en exécutant les étapes :
(1) application d'une couche de Zn-Ni à faible fragilisation par l'hydrogène (Low Hydrogen Embrittlement), c'est-à-dire une couche de LHE-Zn-Ni, sur un acier à résistance élevée,
(2) réalisation d'un premier traitement thermique dans une plage de température de 185 à 220 °C pendant une durée d'au moins 23 heures, et
(3) application d'une couche de finition à pigments métalliques sur la couche de LHE-Zn-Ni,
**caractérisé par**
(4) la réalisation d'un second traitement thermique dans une plage de température de 180 à 200 °C pendant une durée d'au moins 30 minutes,
les étapes sont exécutées dans l'ordre indiquée (1), (2), (3), (4), et
la couche de finition consiste en une mélange des lamelles de zinc et d'aluminium liées par une matrice inorganique ou organique.

2. Élément selon la revendication 1, dans lequel l'épaisseur de la couche de LHE-Zn-Ni est de 30 µm maximum, de préférence de 20 µm maximum.

3. Élément selon l'une des revendications précédentes, dans lequel l'épaisseur du feuil sec de la couche de finition à pigments métalliques après l'étape (4) est de 10 µm maximum.

4. Élément selon l'une des revendications précédentes, dans lequel, avant l'étape (1), une étape est effectuée pour
grenailler le support avec une intensité de 0,1 mm Almen A maximum.

5. Élément selon l'une des revendications précédentes, dans lequel, entre l'étape (2) et l'étape (3) ou entre l'étape (1) et l'étape (2), une étape est effectuée pour
passiver la couche de LHE-Zn-Ni avec ou sans chrome(IV).

6. Élément selon l'une des revendications précédentes, dans lequel, entre l'étape (3) et l'étape (4), une étape est effectuée pour
aérer la couche de finition à pigments métalliques appliquée pendant au moins 5 minutes, de préférence au moins 10 minutes, de façon préférée au moins 20 minutes.

7. Procédé de fabrication d'un revêtement multicouche sur un acier à résistance élevée, comprenant les étapes :
(1) application d'une couche de LHE-Zn-Ni, c'est-à-dire une couche de LHE-Zn-Ni, sur l'acier à résistance élevée,
(2) réalisation d'un premier traitement thermique dans une plage de température de 185 à 220 °C pendant une durée d'au moins 23 heures, et
(3) application d'une couche de finition à pigments métalliques sur la couche de LHE-Zn-Ni,
**caractérisé par**
(4) la réalisation d'un second traitement thermique dans une plage de température de 180 à 200 °C pendant une durée d'au moins 30 minutes, dans lequel
les étapes sont réalisées dans l'ordre (1), (2), (3), (4), et
la couche de finition consiste en un mélange de lamelles de zinc et d'aluminium reliées entre elles par une matrice inorganique ou organique.

8. Procédé selon la revendication 7, dans lequel, avant l'étape (1), le support est grenaillé avec une intensité de 0,1 mm Almen A maximum.

9. Procédé selon la revendication 7 ou 8, dans lequel, entre l'étape (2) et l'étape (3) ou entre l'étape (1) et l'étape (2), la couche de LHE-Zn-Ni est passivée avec ou sans chrome(IV).

10. Procédé selon l'une des revendications 7 à 9, dans lequel, entre l'étape (3) et l'étape (4), une étape est effectuée pour aérer la couche de finition à pigments métalliques appliquée pendant au moins 5 minutes.
